# FASCICULE DE BREVET EUROPEEN

(11) **EP 3 289 187 B1**
(45) Date de publication et mention de la délivrance du brevet: **30.01.2019**
(21) Numéro de dépôt: 16722308.0
(22) Date de dépôt: 26.04.2016
(51) Int. Cl.: F01D 15/12, B64C 27/04, B64D 35/00, F02C 3/10

(54) **TURBOMOTEUR POUR UN AERONEF EQUIPÉ D'UN CENTREUR À ACTIVATION AUTOMATIQUE**
TURBOWELLENMOTOR FÜR EIN FLUGZEUG MIT EINEM AUTOMATISCH BETÄTIGTEN ZENTRIERELEMENT
TURBOSHAFT ENGINE FOR AN AIRCRAFT, COMPRISING AN AUTOMATICALLY ACTUATED CENTERING ELEMENT

(30) Priorité: 27.04.2015 FR 1553752
(43) Date de publication de la demande: 07.03.2018
(73) Titulaire: Safran Helicopter Engines, 64510 Bordes (FR)
(72) Inventeur: LAFARGUE, Olivier, 77550 Moissy-Cramayel (FR); BROTIER, Sébastien, 77550 Moissy-Cramayel (FR)
(74) Mandataire: Gevers & Orès
(86) Numéro de dépôt international: PCT/FR2016/050976
(87) Numéro de publication internationale: WO 2016/174340

(56) Documents cités:
- FR-A1- 2 756 542
- US-A1- 2013 315 714

## Description

### 1. Domaine technique de l'invention

L'invention concerne les turbomoteurs pour aéronef, en particulier les turbomoteurs comprenant une turbine libre dont l'un des paliers est déporté dans un boitier réducteur.

### 2. Arrière-plan technologique

Un turbomoteur comprend de manière connue un générateur de gaz et une turbine libre montée sur un arbre, dit arbre de puissance, Cet arbre de puissance est configuré pour pouvoir être relié mécaniquement à un boitier réducteur. Ce boitier réducteur est par exemple, dans le cas d'un hélicoptère, une boite de transmission de puissance reliée au(x) rotor(s) de l'hélicoptère. Lorsque l'arbre de puissance de la turbine libre et le boitier réducteur sont mécaniquement couplés, la puissance de l'arbre de puissance est transmise à la boite de transmission de puissance, ce qui permet d'entrainer en rotation le(s) rotor(s) de l'hélicoptère.

L'arbre de puissance de la turbine libre est pour sa part entraîné en rotation par la turbine libre qui reçoit les gaz produits par le générateur de gaz et qui les détend, ce qui permet de transformer l'énergie cinétique des gaz reçus en une énergie mécanique récupérée par l'arbre de puissance.

L'arbre de puissance comprend donc deux extrémités, une extrémité, dite extrémité de puissance, qui est configurée pour être reliée au boitier réducteur, et une extrémité opposée, dite extrémité libre, qui porte typiquement les pales de la turbine libre.

Le document FR 2 756 542 anticipe un turbomoteur selon l'art antérieur, où la turbine est montée sur un arbre de puissance configuré pour pouvoir être accouplé/désaccouplé mécaniquement à un boîtier réducteur.

En outre, la tendance actuelle est de concevoir des turbomoteurs directement encastrables dans les boîtiers réducteurs. Un tel turbomoteur encastrable est configuré pour pouvoir être directement monté sur le boîtier réducteur et être maintenu par ce boîtier réducteur. La liaison mécanique entre l'arbre de puissance et le boitier réducteur est alors une liaison encastrement. Cet encastrement peut être un encastrement vertical, horizontal ou oblique. Cette fonctionnalité permet un gain de masse important sur la chaine motrice globale de l'aéronef. Un turbomoteur encastrable présente en outre l'avantage de pouvoir être démonté sans difficultés du boitier réducteur, par exemple pour des opérations de maintenance sur le turbomoteur.

Dans ce cadre, il est envisagé de déporter directement dans le boîtier réducteur les paliers de l'extrémité de puissance de l'arbre de puissance. Cet agencement particulier permet de limiter la longueur axiale de la, chaine motrice formée par le turbomoteur et le boîtier réducteur. En outre, cette liaison entre le moteur et le réducteur est simplifiée par la suppression du système de transmission : cardan et système de type « flectors » ou « bendix »,

L'un des problèmes techniques qui résulte de cet agencement du palier de l'extrémité de puissance de l'arbre de puissance dans le boitier réducteur est que l'arbre de puissance n'est plus maintenu par son palier de puissance lorsqu'il n'est pas encastré dans le boitier réducteur. Dès lors, dans toutes les situations où le turbomoteur n'est pas encastré dans le boîtier réducteur --- par exemple, lors du transport d'un turbomoteur d'un site de production ou de maintenance à un site de montage du turbomoteur sur l'aéronef, lors du stockage du turbomoteur, etc. --- il y a un risque de détérioration des systèmes d'étanchéité et roulements du turbomoteur par battement radial de l'arbre. Par exemple, un battement radial de l'arbre peut générer une dégradation d'un système d'étanchéité du type joint dynamique à bague de carbone ou joint à lèvre. Cette absence de maintien peut également provoquer un contact rotor-stator dans le cas d'une étanchéité par labyrinthe alimenté par un système d'air, par exemple par un contact entre une dent de labyrinthe au contact radial avec l'arbre de puissance non maintenu.

### 3. Objectifs de l'invention

L'invention vise à fournir, dans au moins un mode de réalisation de l'invention, un turbomoteur qui pallie au moins certains des problèmes techniques rencontrés par les turbomoteurs de l'état de la technique,

L'invention vise aussi à fournir, dans au moins un mode de réalisation de l'invention, un turbomoteur encastrable dans un boitier réducteur qui ne soit pas susceptible de subir une dégradation des systèmes d'étanchéité et/ou roulements du turbomoteur, y compris lorsque le turbomoteur est mécaniquement séparé du boîtier réducteur.

L'invention vise aussi à fournir, dans au moins un mode de réalisation, un turbomoteur encastrable qui permet d'assurer un maintien du palier de l'extrémité de puissance de l'arbre de puissance, y compris lorsque le turbomoteur est mécaniquement séparé du boîtier réducteur.

L'invention vise aussi à fournir, dans au moins un mode de réalisation, un aéronef, en particulier un hélicoptère, équipé d'au moins un turbomoteur selon l'invention.

### 4. Exposé de l'invention

Pour ce faire, l'invention concerne un turbomoteur comprenant un carter dans lequel est agencé un générateur de gaz et une turbine libre montée sur un arbre de puissance configuré pour pouvoir être accouplé/désaccouplé mécaniquement à un boîtier réducteur.

Un turbomoteur selon l'invention est caractérisé en ce qu'il comprend au moins un centreur mobile entre une position, dite position active, dans laquelle il forme un palier dudit arbre de puissance et correspondant à un désaccouplement mécanique entre ledit arbre de puissance et ledit boitier réducteur, et une position, dite position passive, dans laquelle il est écarté dudit arbre de puissance et correspondant à un accouplement mécanique entre ledit arbre de puissance et ledit boîtier réducteur.

Un turbomoteur selon l'invention est donc équipé d'un centreur mobile adapté pour être placé dans une position active dans laquelle il forme un palier de l'arbre de puissance, ce qui permet au turbomoteur d'auto-maintenir l'arbre de puissance lorsqu'il est séparé du boîtier réducteur. En outre, lorsque l'arbre de puissance est mécaniquement relié au boîtier réducteur, le centreur mobile est dans une position passive dans laquelle il est radialement écarté de l'arbre de puissance de manière à libérer cet arbre de toute contrainte mécanique.

Un turbomoteur selon l'invention est donc particulièrement destiné à former un turbomoteur encastrable dans un boitier réducteur,

Un tel turbomoteur encastrable comprend donc au moins un centreur mobile entre une position active dans laquelle le centreur forme un palier dudit arbre de puissance lorsque ledit turbomoteur est séparé dudit boitier réducteur et correspondant à un désaccouplement mécanique entre ledit arbre de puissance et ledit boitier réducteur, et une position passive, dans laquelle le centreur est écarté dudit arbre de puissance lorsque ledit turbomoteur est encastré sur ledit boitier réducteur et correspondant à un accouplement mécanique entre ledit arbre de puissance et ledit boitier réducteur.

Aussi, dans toutes les situations où le turbomoteur n'est pas encastré sur le boiter réducteur - stockage du turbomoteur, démontage/remontage du turbomoteur, transport du turbomoteur, etc. - l'arbre de puissance de la turbine libre est maintenu en position par le centreur mobile, qui est alors dans la position active et forme un palier de l'arbre de puissance.

En pratique, l'arbre de puissance comprend au moins un palier au voisinage de chacune de ses extrémités. L'extrémité au voisinage du boitier réducteur est dite extrémité de puissance et l'autre extrémité est dite extrémité libre. Le palier de l'extrémité libre est formé par un boitier palier sur le carter du turbomoteur. Le palier de l'extrémité de puissance est formé par le centreur mobile en position active. Une fois encastré dans le boitier réducteur, le palier est directement formé par le boitier réducteur qui se substitue alors au palier formé par le centreur mobile dans la position active.

Avantageusement et selon l'invention, au moins un centreur mobile - de préférence, chaque centreur mobile - est configuré pour pouvoir passer automatiquement de ladite position active à ladite position passive lors de l'accouplement dudit arbre de puissance audit boitier réducteur et pour pouvoir passer automatiquement de ladite position passive à ladite position active lors du désaccouplement dudit arbre de puissance audit boitier réducteur.

Selon cette variante avantageuse, le passage de la position passive à la position active est automatique et concomitant à la séparation mécanique entre le boitier réducteur et l'arbre de puissance et le passage de la position active à la position passive est automatique et concomitant à l'encastrement du turbomoteur sur le boitier réducteur.

Ce passage de la position active à passive et réciproquement étant automatique, le montage/démontage d'un turbomoteur sur un boitier réducteur nécessite une vigilance moindre par rapport à un turbomoteur non équipé du centreur mobile. En effet, le centreur mobile formant un palier de l'arbre de puissance se met automatiquement en place lors du démontage du turbomoteur et le centreur libère l'arbre automatiquement lors du montage du turbomoteur sur le boitier réducteur. Le maniement d'un turbomoteur selon cette variante de l'invention est donc particulièrement aisé pour un opérateur lors des opérations de montage/démontage du turbomoteur.

Avantageusement et selon l'invention, au moins un centreur mobile - de préférence chaque centreur mobile --- comprend une rampe de guidage conique d'axe parallèle à l'axe dudit arbre de puissance, et conformée à une portion conique dudit carter de sorte que le glissement de ladite rampe de guidage sur ladite portion conique dudit carter déplace radialement ledit centreur mobile par rapport audit arbre de puissance.

Selon cette variante, le centreur mobile comprend une rampe de guidage conique conformée à une portion conique du carter du turbomoteur. Cette rampe de guidage étant d'axe parallèle à l'axe de l'arbre de puissance, la pente de la rampe est inclinée par rapport à l'axe de l'arbre de puissance. Aussi, le glissement du centreur sur la portion conique du carter entraine un déplacement du centreur par rapport à l'arbre de puissance, de la position active à la position passive et inversement, selon le sens de déplacement du centreur par rapport à la portion conique du carter.

Avantageusement, un turbomoteur selon l'invention comprend au moins un ressort monté perpendiculairement audit arbre de puissance, entre ledit carter et un centreur mobile, et au moins un ressort axial s'étendant entre ledit carter et ce centreur mobile, lesdits ressorts étant montés fixes par rapport au carter et coulissant par rapport au centreur mobile, et étant configurés pour pouvoir exercer une force résultante qui s'oppose au glissement spontané de ladite rampe de guidage sur ladite portion conique dudit carter en direction dudit carter.

Selon une autre variante, ces ressorts sont remplacés par d'autres moyens élastiques équivalents.

Selon encore une autre variante, les ressorts ou moyens élastiques sont inclinés par rapport à l'axe de l'arbre de puissance.

Selon ces différentes variantes, les ressorts (ou moyens élastiques équivalents) s'opposent au glissement spontané de la rampe de guidage sur la portion conique en direction du carter. En d'autres termes, en l'absence d'une contrainte extérieure, la rampe conique du centreur n'est pas en contact avec la portion conique du carter. En l'absence d'une contrainte extérieure, les ressorts repoussent le centreur mobile vers l'arbre de puissance, de sorte qu'il puisse former un palier de l'arbre de puissance. Les ressorts étant montés coulissant le long du centreur mobile et fixe par rapport au carter, chaque ressort assure le déplacement du centreur mobile dans une direction privilégié sans contraindre le déplacement du centreur dans la direction perpendiculaire. La combinaison des déplacements forme le déplacement le long de la rampe de guidage.

A l'inverse, si une force extérieure est exercée sur le centreur en direction du carter, la, rampe de guidage glisse sur la portion conique du carter et s'écarte donc radialement de l'arbre de puissance.

A cet effet, avantageusement et selon l'invention, un centreur mobile présente une butée s'étendant dans un plan perpendiculairement à l'axe dudit arbre de puissance en regard d'une surface d'appui du boitier réducteur de sorte que l'accouplement mécanique entre ledit arbre de puissance et ledit boitier réducteur génère un contact mécanique entre ladite surface d'appui et ladite butée qui entraine, par compression desdits ressorts, le glissement dudit centreur sur ladite portion conique dudit carter de ladite position active dans laquelle il forme un palier de l'arbre de puissance à ladite position passive dans laquelle il est écarté de l'arbre.

Selon cette variante, le contact entre la surface d'appui du boitier réducteur et la butée du centreur mobile qui résulte de l'encastrement du turbomoteur sur le boitier réducteur, entraine automatiquement le glissement du centreur sur la portion conique du carter et donc l'écartement du centreur mobile de l'arbre de puissance. Le centreur mobile passe donc automatiquement en position passive. A l'inverse, dès que le turbomoteur est séparé du boitier réducteur, la butée du centreur n'est plus contrainte par le boitier réducteur, et les ressorts repoussent donc le centreur vers l'arbre de puissance, formant ainsi un palier support de l'arbre.

Avantageusement et selon l'invention, au moins un centreur mobile - de préférence chaque centreur mobile --- présente une surface de contact concave avec ledit arbre de puissance de sorte qu'il entoure au moins partiellement ledit arbre en position active.

Selon une autre variante, au moins un centreur mobile présente une surface de contact convexe avec ledit arbre de puissance,

Avantageusement, un turbomoteur selon l'invention comprend au moins deux centreurs mobiles agencés autour dudit arbre de puissance.

L'invention concerne également un aéronef, notamment un hélicoptère, comprenant au moins un turbomoteur selon l'invention.

L'invention concerne également un turbomoteur et un aéronef équipé d'un turbomoteur, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'un turbomoteur encastré dans un boitier réducteur,
- la figure 2 est une vue schématique en coupe d'un détail d'un turbomoteur selon un mode de réalisation de l'invention sur laquelle le centreur est en position passive,
- la figure 3 est une vue schématique en coupe d'un détail d'un turbomoteur selon un mode de réalisation de l'invention sur laquelle le centreur est en position active,
- la figure 4 est une vue schématique en coupe d'un détail d'un turbomoteur selon un mode de réalisation de l'invention équipé de deux centreurs mobiles,
- la figure 5 est une vue schématique en coupe d'un détail d'un turbomoteur selon un mode de réalisation de l'invention équipé de trois centreurs mobiles.

### 6. Description détaillée d'un mode de réalisation de l'invention

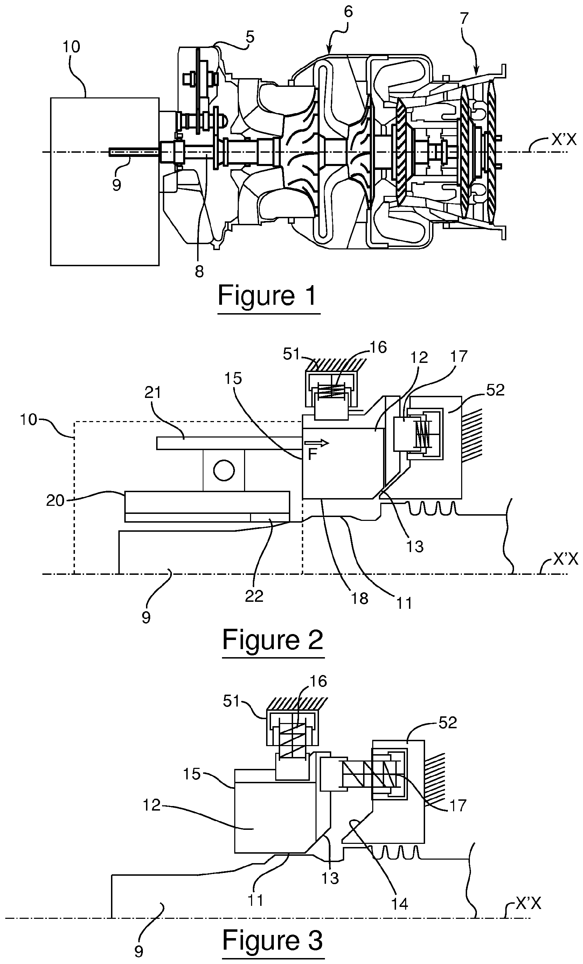

Sur la figure, les échelles et les proportions ne sont pas strictement respectées et ce, à des fins d'illustration et de clarté, Dans toute la description détaillée qui suit en référence aux figures, sauf indication contraire, chaque élément du turbomoteur est décrit tel qu'il est agencé lorsque le turbomoteur est en position de montage horizontal sur un boitier réducteur. Cet agencement est notamment représenté sur la figure 1. Par ailleurs, le terme « axial » se rapporte à des localisations le long de l'axe central X'X du turbomoteur. Le terme « radial » se rapporte à des localisations perpendiculaires à cet axe central. Enfin, les éléments ayant les mêmes signes de référence sur différentes figures se rapportent à des éléments identiques.

Tel que représenté sur la figure 1, un turbomoteur selon l'invention comprend un carter 5 dans lequel sont montés un générateur de gaz 6 et une turbine libre 7. La turbine libre 7 est solidaire d'un arbre 8 de puissance. Selon le mode de réalisation des figures, l'arbre 8 de puissance qui porte la turbine libre 7 et qui permet de relier le turbomoteur à un boitier réducteur 10, passe à l'intérieur de l'arbre du générateur de gaz de sorte que l'extrémité 9 de puissance de l'arbre de puissance est du côté du générateur de gaz. Le générateur de gaz 6 et son fonctionnement ne sont pas décrits en détail et sont bien connus de l'homme du métier. L'invention s'applique bien sur également à un turbomoteur dont l'arbre de puissance ne traverse pas le générateur de gaz et dont l'extrémité de puissance est donc à l'opposée du générateur de gaz.

L'arbre 8 de puissance s'étend selon la direction X'X du turbomoteur. L'arbre 8 de puissance est en outre configuré pour pouvoir être relié à un boîtier 10 réducteur telle qu'une boite de transmission de puissance d'un hélicoptère. L'accouplement mécanique entre l'arbre 8 de puissance et le boitier 10 réducteur n'est pas représenté en détail sur les figures. Le boitier 10 réducteur comprend par exemple un premier étage équipé d'un pignon 20 menant adapté pour être engrené par un pignon solidaire de l'arbre 8 de puissance au voisinage de son extrémité 9 de puissance,

Un turbomoteur selon l'invention comprend en outre un centreur 12 mobile. Le centreur 12 est porté par le carter 5 et peut se déplacer d'une position, dite position active, dans laquelle il forme un palier de l'arbre 8 de puissance, et une position, dite position passive, dans laquelle il est écarté de l'arbre 8 de puissance.

La figure 2 représente le centreur 12 en position passive et la figure 3 représente le centreur 12 en position active.

Le centreur 12 est configuré et monté sur le carter 5 de telle sorte que la position active corresponde à un désaccouplement entre l'arbre 8 de puissance et le boitier 10 réducteur et la position passive corresponde à un accouplement mécanique entre l'arbre 8 de puissance et le boitier réducteur.

Pour ce faire, le centreur 12 mobile comprend une rampe 13 de guidage conique d'axe parallèle à l'axe X'X de l'arbre 8 de puissance. Cette rampe 13 est conformée à une portion 14 conique du carter 5 de sorte qu'une force F d'axe parallèle à l'axe X'X exercée sur le carter mobile en direction du carter 5 puisse entrainer un déplacement du centreur 12 mobile qui l'écarté radialement de l'arbre 8 de puissance. Ce déplacement radial est obtenu par glissement de la rampe 13 de guidage sur la portion 14 conique du carter 5.

Cette force F d'axe parallèle à l'axe X'X est produite par le contact entre un élément du boitier 10 réducteur, tel que par exemple le stator 21 du pignon 20 menant du boitier 10 réducteur, et une butée 15 du centreur mobile qui s'étend dans un plan perpendiculairement à l'axe X'X. Ce contact entre le stator 21 du pignon menant du boitier 10 réducteur et la butée 15 du centreur 12 mobile résulte de l'encastrement du turbomoteur dans le boitier réducteur. En d'autres termes, lors du montage du turbomoteur sur le boitier réducteur, le contact entre le stator 21 et la butée 15 se produit automatiquement, ce qui permet de générer la force F d'axe X'X, et donc le déplacement du centreur 12 mobile vers la position passive dans laquelle il est radialement écarté de l'arbre 8 de puissance.

Le turbomoteur comprend également selon un mode de réalisation avantageux représenté sur les figures 2 et 3, un ressort 16 radial, monté entre une portion 51 axiale du carter 5 et le centreur 12 mobile, et un ressort 17 axial monté entre une portion 52 radiale du carter 5 et le centreur 12 mobile. Selon le mode de réalisation des figures, la portion 52 radiale du carter 5 est le prolongement de la portion 14 conique du carter 5. Chaque ressort présente une extrémité fixe par rapport au carter et une autre extrémité coulissante par rapport au centreur mobile.

Ces ressorts permettent donc de former une force résultante qui s'oppose au glissement spontané du centreur 12 mobile sur la portion 13 conique du carter 5, en direction de la portion 13 conique du carter 5.

Sur la figure 2, les ressorts 16, 17 sont comprimés par l'action de la force F. Le centreur 12 mobile est donc déplacé dans sa position passive dans laquelle il est radialement écarté de l'arbre 8 de puissance et n'est pas en interaction mécanique avec l'arbre 8 de puissance. Dans cette position, le palier de l'extrémité 9 de puissance de l'arbre 8 de puissance est directement formé par le boitier 10 réducteur. En particulier, le centrage de l'arbre 8 de puissance est directement réalisé par le contact entre le pignon 20 menant du boitier 10 réducteur et l'extrémité 9 de l'arbre de puissance. Le contact entre le pignon 20 et l'arbre 8 de puissance est schématiquement représenté par la référence 22 sur la figure 2.

Sur la figure 3, le turbomoteur est séparé du boitier 10 réducteur. Dans cette situation, la force F a donc disparu, de sorte que les ressorts 16, 17 ont pu se détendre pour repousser le centreur 12 mobile du carter 5. Le centreur 12 mobile est donc dans sa position active dans laquelle il est en contact avec l'arbre 8 de puissance. Ce contact s'effectue au niveau d'une surface 18 de contact du centreur 12 mobile et d'une portée 11 de centrage de l'arbre 8 de puissance. Lorsque la surface 18 de contact du centreur 12 mobile est en contact avec la portée 11 de centrage de l'arbre 8 de puissance, le centreur 12 mobile forme un palier de support de l'arbre 8 de puissance. Sur la figure 3, le centreur 12 mobile est en appui forcé contre la portée 11 de centrage, ce qui permet de former un palier de l'arbre 8 de puissance. L'arbre 8 de puissance est donc auto-maintenu. Il s'agit de la position active du centreur 12 mobile.

Selon un mode de réalisation avantageux, la surface 18 de contact du centreur 12 mobile est concave de sorte que le centreur entoure au moins partiellement ledit arbre 8 de puissance en position active, Cela permet d'améliorer le maintien de l'arbre 8 de puissance par le centreur 12 mobile en position active.

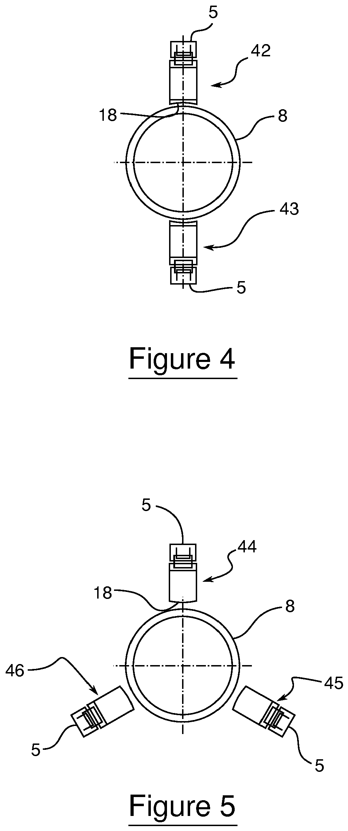

Selon un mode de réalisation avantageux représenté sur la, figure 4, le turbomoteur comprend deux centreurs 42, 43 mobiles agencés autour de l'arbre 8 de puissance, diamétralement opposés l'un par rapport à l'autre. Chaque centreur 42, 43 mobile est par exemple un centreur tel que décrit en lien avec les figures 2 et 3.

Selon un autre mode de réalisation représenté sur la figure 5, le turbomoteur comprend trois centreurs 44, 45, 46 mobiles uniformément répartis autour de l'arbre 8 de puissance de la turbine libre du turbomoteur, Selon le mode de réalisation de la figure 5, chaque centreur est identique à celui décrit en lien avec les figures 2 et 3, à l'exception de la surface 18 de contact de chaque centreur qui n'est pas concave, mais convexe dans ce mode de réalisation.

Selon d'autres modes de réalisation non représentés sur les figures, le turbomoteur peut comprendre à la fois des centreurs concaves et des centreurs convexes.

Selon d'autres modes de réalisation non représentés sur les figures, le turbomoteur peut comprendre plus de trois centreurs mobiles répartis autour de l'arbre de puissance.

L'invention concerne également un hélicoptère comprenant au moins un turbomoteur selon l'invention,

A noter également qu'un centreur mobile d'un turbomoteur selon l'invention peut utilement équiper un arbre de puissance d'un moteur à combustion interne (à pistons ou à rotor).

Il peut également être utilisé pour une liaison d'une turbine à gaz sur un réducteur d'hélice de turbopropulseur d'avion (voilures fixes).

## Revendications

1. Turbomoteur comprenant un carter (5) dans lequel est agencé un générateur (6) de gaz et une turbine (7) libre montée sur un arbre (8) de puissance configuré pour pouvoir être accouplé/désaccouplé mécaniquement à un boitier (10) réducteur,
**caractérisé en ce que** ledit turbomoteur comprend au moins un centreur (12) mobile entre une position, dite position active, dans laquelle il forme un palier dudit arbre (8) de puissance et correspondant à un désaccouplement mécanique entre ledit arbre (8) de puissance et ledit boitier (10) réducteur, et une position, dite position passive, dans laquelle il est écarté dudit arbre (8) de puissance et correspondant à un accouplement mécanique entre ledit arbre (8) de puissance et ledit boitier (10) réducteur,

2. Turbomoteur selon la revendication 1, **caractérisé en ce qu'**au moins un centreur (12) mobile est configuré pour pouvoir passer automatiquement de ladite position active à ladite position passive lors de l'accouplement dudit arbre (8) de puissance audit boitier (10) réducteur et pour pouvoir passer automatiquement de ladite position passive à ladite position active lors du désaccouplement dudit arbre (8) de puissance audit boitier (10) réducteur,

3. Turbomoteur selon la revendication 2, **caractérisé en ce qu'**au moins un centreur (12) mobile comprend une rampe (13) de guidage conique d'axe parallèle à l'axe (X'X) dudit arbre de puissance, et conformée à une portion (14) conique dudit carter (5) de sorte que le glissement de ladite rampe (13) de guidage sur ladite portion (14) conique dudit carter (5) déplace ledit centreur (12) mobile par rapport audit arbre (8) de puissance.

4. Turbomoteur selon la revendication 3, **caractérisé en ce qu'**il comprend au moins un ressort (16) radial monté perpendiculairement audit arbre (8) de puissance, entre ledit carter (5) et un centreur (12) mobile, et au moins un ressort (17) axial s'étendant entre ledit carter (5) et ce centreur (12) mobile, lesdits ressorts (16, 17) étant montés fixes par rapport au carter et coulissant par rapport au centreur mobile, et configurés pour pouvoir exercer une force résultante qui s'oppose au glissement spontané de ladite rampe (13) de guidage sur ladite portion (14) conique dudit carter (5), en direction dudit carter (5).

5. Turbomoteur selon la revendication 4, **caractérisé en ce qu'**au moins un centreur (12) mobile présente une butée (15) s'étendant dans un plan perpendiculairement à l'axe (X'X) dudit arbre (8) de puissance en regard d'une surface d'appui du boitier (10) réducteur de sorte que l'accouplement mécanique entre ledit arbre (8) de puissance et ledit boitier (10) réducteur génère un contact mécanique entre ladite surface d'appui et ladite butée (15) qui entraine, par compression desdits ressorts (16, 18), le glissement dudit centreur (12) sur ladite portion (14) conique dudit carter (5) de ladite position active dans laquelle il forme un palier de l'arbre (8) de puissance à ladite position passive dans laquelle il est écarté de l'arbre (8) de puissance,

6. Turbomoteur selon l'une des revendications 1 à 5, **caractérisé en ce qu'**au moins un centreur (12) mobile présente une surface (18) de contact concave avec ledit arbre (8) de puissance de sorte qu'il entoure au moins partiellement ledit arbre (8) de puissance en position active.

7. Turbomoteur selon l'une des revendications 1 à 6, **caractérisé en ce qu'**il comprend au moins deux centreurs (42, 43 ; 44, 45, 46) mobiles agencés autour dudit arbre (8) de puissance.

8. Hélicoptère comprenant au moins un turbomoteur selon l'une des revendications 1 à 7.

## Patentansprüche

1. Turbomotor, ein Gehäuse (5) umfassend, in dem ein Gasgenerator (6) und eine freie Turbine (7) angeordnet sind, die auf einer Leistungswelle (8) montiert ist, die konfiguriert ist, um mechanisch mit einem Untersetzungsgetriebe (10) gekoppelt bzw. entkoppelt zu werden,
**dadurch gekennzeichnet, dass** der Turbomotor mindestens ein Zentrierelement (12) umfasst, das zwischen einer sogenannten aktiven Position, in der es ein Lager der Leistungswelle (8) bildet und einer mechanischen Entkopplung zwischen der Leistungswelle (8) und dem Untersetzungsgetriebe (10) entspricht, und einer sogenannten passiven Position beweglich ist, in der es von der Leistungswelle (8) beabstandet ist und einer mechanischen Kopplung zwischen der Leistungswelle (8) und dem Untersetzungsgetriebe (10) entspricht.

2. Turbomotor nach Anspruch 1, **dadurch gekennzeichnet, dass** mindestens ein bewegliches Zentrierelement (12) konfiguriert ist, um bei der Kopplung der Leistungswelle (8) mit dem Untersetzungsgetriebe (10) automatisch von der aktiven Position in die passive Position wechseln zu können und bei der Entkopplung der Leistungswelle (8) von dem Untersetzungsgetriebe (10) automatisch von der passiven Position in die aktive Position wechseln zu können.

3. Turbomotor nach Anspruch 2, **dadurch gekennzeichnet, dass** mindestens ein bewegliches Zentrierelement (12) eine konische Führungsrampe (13) mit einer Achse parallel zur Achse (X' X) der Leistungswelle umfasst und zu einem konischen Abschnitt (14) des Gehäuses (5) derart ausgebildet ist, dass das Gleiten der Führungsrampe (13) auf dem konischen Abschnitt (14) des Gehäuses (5) das bewegliche Zentrierelement (12) in Bezug auf die Leistungswelle (8) bewegt.

4. Turbomotor nach Anspruch 3, **dadurch gekennzeichnet, dass** er mindestens eine radiale Feder (16), die senkrecht zur Leistungswelle (8) zwischen dem Gehäuse (5) und einem beweglichen Zentrierelement (12) montiert ist, und mindestens eine axiale Feder (17) umfasst, die sich zwischen dem Gehäuse (5) und diesem beweglichen Zentrierelement (12) erstreckt, wobei die Federn (16, 17) in Bezug auf das Gehäuse fest montiert und in Bezug auf das bewegliche Zentrierelement gleitend sind und konfiguriert sind, um eine resultierende Kraft ausüben zu können, die dem spontanen Gleiten der Führungsrampe (13) auf den konischen Abschnitt (14) des Gehäuses (5) in Richtung des Gehäuses (5) entgegenwirkt.

5. Turbomotor nach Anspruch 4, **dadurch gekennzeichnet, dass** mindestens ein bewegliches Zentrierelement (12) einen Anschlag (15) aufweist, der sich in einer Ebene senkrecht zur Achse (X'X) der Leistungswelle (8) gegenüber einer Auflagefläche des Untersetzungsgetriebes (10) erstreckt, so dass die mechanische Kopplung zwischen der Leistungswelle (8) und dem Untersetzungsgetriebe (10) einen mechanischen Kontakt zwischen der Auflagefläche und dem Anschlag (15) erzeugt, der durch Kompression der Federn (16, 18), das Gleiten des Zentrierelements (12) auf dem konischen Abschnitt (14) des Gehäuses (5) aus der aktiven Position, in der es ein Lager der Leistungswelle (8) bildet, in die passive Position, in der es von der Leistungswelle (8) beabstandet ist, antreibt.

6. Turbomotor nach einem der Ansprüche 1 bis 5, **dadurch gekennzeichnet, dass** mindestens ein bewegliches Zentrierelement (12) eine konkave Kontaktfläche (18) mit der Leistungswelle (8) aufweist, so dass es die Leistungswelle (8) in der aktiven Position zumindest teilweise umgibt.

7. Turbomotor nach einem der Ansprüche 1 bis 6, **dadurch gekennzeichnet, dass** er mindestens zwei bewegliche Zentrierelemente (42, 43; 44, 45, 46) umfasst, die um die Leistungswelle (8) angeordnet sind.

8. Hubschrauber, umfassend mindestens einen Turbomotor nach einem der Ansprüche 1 bis 7.

## Claims

1. Turboshaft engine comprising a casing (5) in which is arranged a gas generator (6) and a free turbine (7) fitted to a power shaft (8) configured to be capable of being mechanically connected to/disconnected from a reduction gearbox (10),
**characterised in that** said turboshaft engine comprises at least one centraliser (12) movable between a position, known as the active position, in which it forms a bearing for said power shaft (8) and which corresponds to a mechanical disconnection between said power shaft (8) and said reduction gearbox (10), and a position, known as the passive position, in which it is distanced from said power shaft (8) and which corresponds to a mechanical connection between said power shaft (8) and said reduction gearbox (10).

2. Turboshaft engine according to claim 1, **characterised in that** at least one movable centraliser (12) is configured so that it can pass automatically from said active position to said passive position during connection of said power shaft (8) to said reduction gearbox (10), and so that it can pass automatically from said passive position to said active position during disconnection of said power shaft (8) from said reduction gearbox (10).

3. Turboshaft engine according to claim 2, **characterised in that** at least one movable centraliser (12) comprises a conical guide ramp (13) with an axis parallel to the axis (X'X) of said power shaft, and of the same shape as a conical portion (14) of said casing (5) so that the sliding of said guide ramp (13) on said conical portion (14) of said casing (5) displaces said movable centraliser (12) relative to said power shaft (8).

4. Turboshaft engine according to claim 3, **characterised in that** it comprises at least one radial spring (16) fitted perpendicularly to said power shaft (8), between said casing (5) and a movable centraliser (12), and at least one axial spring (17) extending between said casing (5) and this movable centraliser (12), said springs (16, 17) being fitted so that they are fixed relative to the casing and slideable relative to the movable centraliser, and being configured so that they can exert a resultant force that opposes the spontaneous sliding of said guide ramp (13) on said conical portion (14) of said casing (5), towards said casing (5).

5. Turboshaft engine according to claim 4, **characterised in that** at least one movable centraliser (12) has a stop (15) extending in a plane perpendicularly to the axis (X'X) of said power shaft (8) opposite a bearing surface of the reduction gearbox (10), so that the mechanical connection between said power shaft (8) and said reduction gearbox (10) produces a mechanical contact between said bearing surface and said stop (15) that leads, through compression of said springs (16, 18), to said centraliser (12) sliding on said conical portion (14) of said casing (5), from said active position in which it forms a bearing for the power shaft (8), to said passive position in which it is distanced from the power shaft (8).

6. Turboshaft engine according to any of claims 1 to 5, **characterised in that** at least one movable centraliser (12) has a concave surface of contact (18) with said power shaft (8) so that it at least partially surrounds said power shaft (8) in the active position.

7. Turboshaft engine according to any of claims 1 to 6, **characterised in that** it comprises at least two movable centralisers (42, 43; 44, 45, 46) arranged around said power shaft (8).

8. Helicopter comprising at least one turboshaft engine according to any of claims 1 to 7.
